# EUROPÄISCHE PATENTANMELDUNG

(11) **EP 1 736 396 A1**
(43) Veröffentlichungstag der Anmeldung: **27.12.2006**
(21) Anmeldenummer: 05022176.1
(22) Anmeldetag: 12.10.2005
(51) Int. Cl.: B62D 25/06, B62D 33/04, B62D 29/04, B60P 3/32

(54) **Äussere Verkleidung der Karosserie für einen Wohnwagen, ein Wohnmobil oder ein ähnliches Fahrzeug**

(30) Priorität: 22.06.2005 IT MI20051176
(71) Anmelder: Dream Motorcaravans S.p.A., 27020 Trivolzio PV (IT)
(72) Erfinder: Alinari, Pierluigi, 53037 San Gimignano (Siena) (IT)
(74) Vertreter: Mayer, Hans Benno

(57) **Zusammenfassung**

Äußere Verkleidung der Karosserie eines Wohnwagens, eines Wohnmobils oder eines ähnlichen Fahrzeuges, wobei vorgesehen ist, dass die Verkleidung der oberen Karosserieplatte (10), die das Dach des Fahrzeuges bildet, in Übereinstimmung mit einer Verbindung mit einer vertikal angeordneten Platte (8) eine Verformung aufweist, die eine Kammer (15) bildet, welche von einer Rippe (14) begrenzt ist, die sich in Längsrichtung des Fahrzeuges erstreckt, wobei in Übereinstimmung mit der vertikal angeordneten Verkleidungsplatte, die Längsrippe (14) auf ihrer Innenseite von einer schrägen Ebene (24) begrenzt wird, die an einer schrägen Fläche der vertikal angeordneten Platte (8) anliegt, und die schräge Fläche (24) der Verkleidung in einem Absatz (22) endet, der an einer Stufe (23) der vertikalen Platte anliegt, die der schrägen Fläche der vertikal angeordneten Platte folgt, und der Absatz (22) der Verkleidung in eine Verlängerung (21) übergeht, die in eine Ausnehmung (20) eintritt, die in der vertikal angeordneten Platte vorgesehen ist.

## Beschreibung

Die vorstehende Erfindung betrifft eine Verkleidung der Karosserie eines Wohnwagens, eines Wohnmobils oder eines ähnlichen Fahrzeuges.

Es ist bekannt, dass heute Fahrzeuge, wie Wohnwagen oder Wohnmobile aus einem kräftigen Grundrahmen bestehen, der an der Fahrzeugvorderseite eine Fahrerkabine aufnimmt und den Antriebsmotor des Fahrzeuges trägt, sowie Steuermittel für das Fahrzeug.

Der Rahmen des Fahrzeuges nimmt auch den oberen Aufbau des Wohnmobils auf, wobei dieser Aufbau üblicherweise aus beschichteten Platten besteht, in die Öffnungen zur Bildung von Fenstern, Zugangstüren sowie Gitter und Öffnungen für Belüftungszwecke eingebracht sind.

Diese Fahrzeuge, die unterschiedliche Länge aufweisen, bestehen aus vertikal angeordneten Platten, die auf dem Rahmen des Fahrzeuges angeordnet sind, an der Oberseite sind die Platten der Karosserie mit geformten Platten verbunden, die das Dach des Fahrzeuges bilden.

In Übereinstimmung mit der Verbindungsstelle zwischen den vertikal angeordneten Wandplatten und der im Wesentlichen horizontal angeordneten Platten, welche das Dach des Fahrzeuges bilden, sowie in Übereinstimmung mit der Verbindung mit der rückwärtigen Wand des Fahrzeuges, war es bisher üblich und notwendig, an diesen Stoßstellen deutlich sichtbare Dichtungsmittel anzuordnen, die allgemein aus Metallprofilen bestanden, kombiniert mit elastischen Bauteilen aus Kunststoff. Die Verwendung von Verbindungs- und Dichtungsprofilen führte in der Vergangenheit nicht nur zu einem unschönen Erscheinungsbild, sondern führte auch zu Teilbereichen, auch wenn für diese aufwändige Dichtungen vorgesehen waren, bei denen die Gefahr eines Wassereintrittes oder das Eintreten von Feuchte in den Innenraum des Fahrzeuges nicht auszuschließen war.

Ferner ist zu berücksichtigen, dass aufgrund der sich ändernden Längsabmessungen des Dachteiles für die einzelnen Fahrzeuge keine Möglichkeit bestand, eine einzige Platte für die Verkleidung des Daches vorzusehen, mit besonderer Formgebung und einer bestimmten Länge für jede Längsabmessung des zu fertigenden Fahrzeuges.

Aufgabe der vorstehenden Erfindung ist es, die Nachteile des Standes der Technik zu vermeiden und eine Verkleidung für ein Fahrzeug wie einen Wohnwagen oder ein Wohnmobil vorzuschlagen, das keine Abdeck- und Dichtungsprofile zwischen den Stoßstellen der senkrecht angeordneten Wandplatten und der horizontalen Wandplatten des Fahrzeuges erfordert, dass ferner größtmögliche Sicherheit gegen unerwünschten Eintritt von Wasser und

Feuchtigkeit gegeben ist und dass weiterhin eine einfache Anpassung der Abmessungen der Dachplatte an unterschiedliche Längen des Fahrzeuges möglich wird.

Diese Aufgabe wird durch eine äußere Verkleidung der Karosserie eines Wohnwagens, eines Wohnmobils oder eines ähnlichen Fahrzeuges dadurch erreicht, dass die Verkleidung der oberen Karosserieplatte, die das Dach des Fahrzeuges bildet, in Übereinstimmung mit einer Verbindung mit einer vertikal angeordneten Verkleidungsplatte eine Verformung aufweist, die eine Kammer bildet, welche von einer Rippe begrenzt wird, die sich in Längsrichtung erstreckt, wobei in Übereinstimmung mit der vertikal angeordneten Verkleidungsplatte, die Längsrippe auf ihrer Innenseite von einer schrägen Ebene begrenzt wird, die an einer schrägen Fläche der vertikal angeordneten Verkleidungsplatte anliegt und die schräge Fläche der Verkleidung in einem Absatz endet, der an einer Stufe der vertikalen Verkleidungsplatte anliegt, die der schrägen Fläche der vertikal angeordneten Platte folgt, und der Absatz der Verkleidung in eine Verlängerungsrippe übergeht, die in eine Ausnehmung eintritt, die in der vertikal angeordneten Platte vorgesehen ist.

Der Erfindungsgegenstand wird nun genauer anhand eines Ausführungsbeispieles beschrieben und in den beigefügten Zeichnungen dargestellt:
Figur 1 zeigt in perspektivischer Ansicht eine Anzahl von plattenförmigen Bauteilen, die zum Abdecken der Dachzone des Fahrzeuges dienen;
Figur 2 zeigt ein Detail der Verbindung zwischen einer vertikal angeordneten Wandplatte und einer horizontal angeordneten Platte, die das Dach des Fahrzeuges bildet;
Figur 3 zeigt im Schnitt und in Vorderansicht, die Verbindung zwischen einer vertikal angeordneten Wand und einer Platte, die das Dach des Fahrzeuges bildet;
Figur 4 zeigt schematisch drei Bauteile, die die Verkleidung des Fahrzeugdaches bilden.

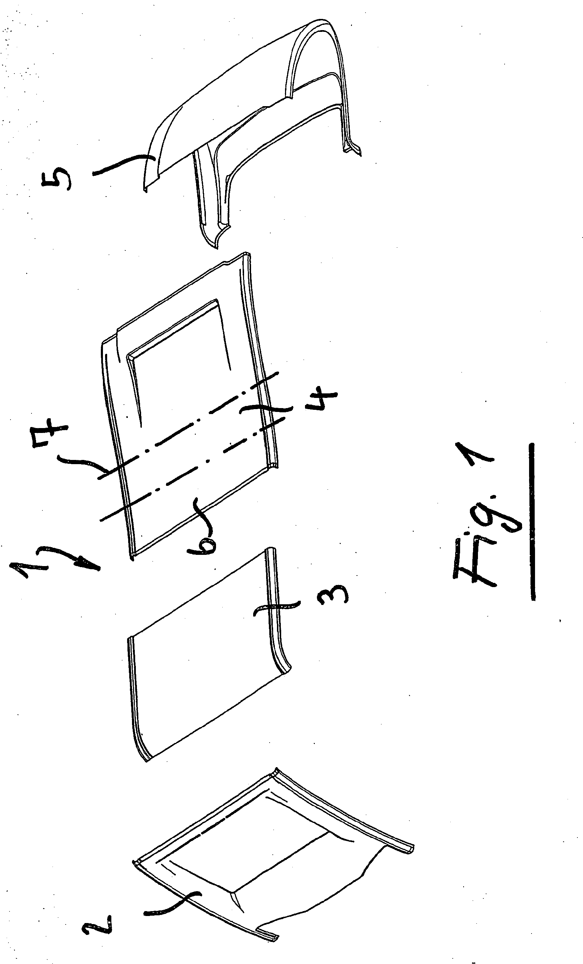

In Figur 1 sind verschiedene plattenförmige Bauteile zur Verkleidung des Fahrzeugdaches dargestellt. Diese Bauteile sind gesamthaft mit 1 gekennzeichnet.

Die Platte 2 bildet das rückwärtige Teilstück der Verkleidung, die Platte 3 sowie die Platte 4 bilden die Verkleidung des mittleren Dachteiles und das verformte Bauteil 5 bildet die Verkleidung des Vorderteiles des Daches, die über der Fahrerkabine des Fahrzeuges angeordnet ist.

Die Verkleidungsteile 2, 3, 4 und 5 sind in vorteilhafter Weise aus verstärktem Kunststoff hergestellt und die Verformung oder Formgebung der Verkleidungsteile erfolgt in einer geeigneten Pressform, die bekannten Aufbau und entsprechende Abmessungen aufweist.

Wie der Figur 1 zu entnehmen, weist die Verkleidung 1 ein ebenes Bauteil 6 auf, das erhebliche Längserstreckung hat. Um dieses plattenförmige Bauteil 6 an unterschiedliche Längen des Fahrzeuges anpassen zu können, genügt es, quer verlaufende Trennschritte durchzuführen, wie dies in Figur 1 mit Strichpunktlinien 7 dargestellt ist.

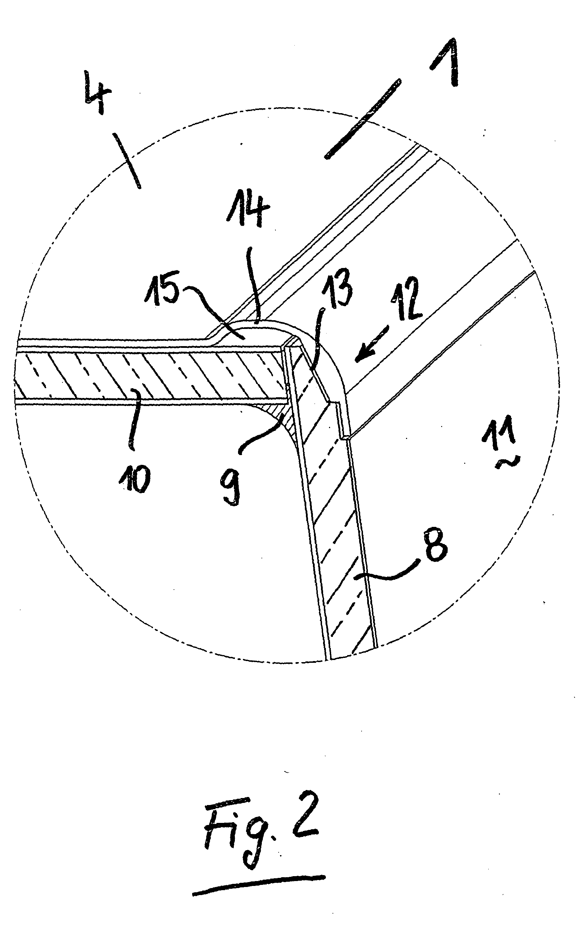

Der Figur 2 kann entnommen werden, dass die Karosserie des Fahrzeuges im Wesentlichen aus vertikal angeordneten Verkleidungsplatten 8 besteht. Auf der Innenseite der vertikal angeordneten Platten 8 ist in vorteilhafter Weise eine Stütze 9 angeordnet, die als Auflager für die Platte 10 dient, die in einer horizontalen Ebene angeordnet ist und das Dach des Fahrzeuges 1 bildet.

Die Außenseite der Platte 8 weist eine übliche äußere Beschichtung 11 auf.

Beschichtungen auf der Außenseite dieser Platten sind allgemein aus dem Stand der Technik bekannt und erfordern keiner weiteren Beschreibung.

In Figur 2 ist aus Gründen der Einfachheit nur ein Teilstück der oberen Platte 4 dargestellt, die das Dach des Fahrzeuges bildet, zusammen mit einem Teil der Platte 8, welche die vertikale Wand des Fahrzeuges bildet.

In Übereinstimmung mit ihrem oberen Ende wird die vertikal angeordnete Platte 8 von einem Profil abgedeckt, welches nach außen gerichtet ist und gesamthaft mit 12 gekennzeichnet ist.

Dieses Profil 12 ist deckungsgleich mit einem Gegenprofil 13 der horizontal angeordneten Verkleidung, wie dies im Anschluss noch genauer beschrieben werden wird.

In Übereinstimmung mit den Längsseiten weisen die horizontal angeordneten Verkleidungsplatten 2, 3, 4, 5 eine Verformung 14 oder eine Rippe auf, welche sich in Längsrichtung erstreckt und nach oben absteht, um somit eine Rippe 14 zu bilden, die aus der horizontalen Ebene nach oben absteht.

Diese Rippe 14 hat den Vorteil, dass eine wirkungsvolle Begrenzung gebildet wird und ein unerwünschtes Abfließen von Wasser vom Fahrzeugdach in Richtung der senkrecht angeordneten Wände unterbunden wird, z.B. im Falle einer Neigung der Karosserie des Fahrzeuges, wenn z.B. eine Person seitlich in den Innenraum des Fahrzeuges eintreten will.

Die Verformung der Rippe 14 ist so ausgewählt, dass gleichzeitig eine Längskammer 15 gebildet wird, die als Ausgleichszone dient und gleichzeitig als Mittel zur thermischen Isolierung dient.

Die Kammer 15 kann auch mit Kunststoffschaum, der sehr elastisch eingestellt sein sollte, gefüllt werden, wodurch eine dauerhaft wirkende Dichtung geschaffen wird.

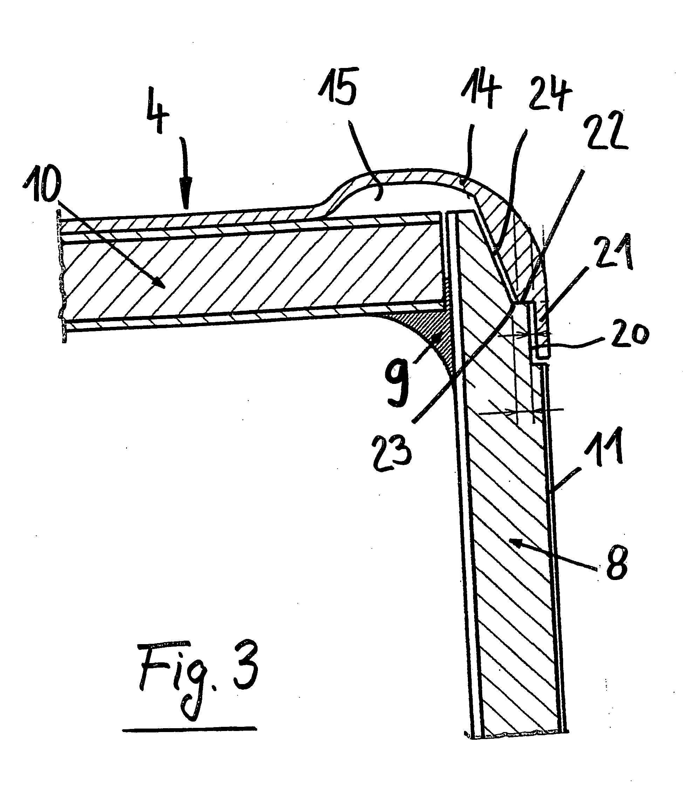

Der Figur 3 kann im Detail das obere Ende der vertikal angeordneten Platte 8 entnommen werden, wobei an diesem Plattenende eine Stufe 20 ausgebildet ist, die eine Verlängerung 21 aufnimmt, die sich in Längsrichtung erstreckt und die Unterseite der Rippe oder der Verdickung 14 bildet.

Im Anschluss an die Verlängerung 21, bildet das Ende der Rippe 14 eine Stufe 22, welche auf einer Gegenstufe 23 der vertikal angeordneten Platte 8 aufliegt. Die Platte 8 ist im Anschluss daran über eine geneigte Fläche 24 mit dem oberen Ende der Platte verbunden. Die verschiedenen Endflächen 20, 23, 24 der Platte 8 werden mit den entsprechend angeordneten inneren Flächen der Rippe 14 in vorteilhafter Weise unter Einsatz eines Klebers verbunden.

Die bisher beschriebenen Bauteile sind derartig ausgebildet und bemessen, dass ein einwandfreies Ausrichten der äußeren Verkleidung 11 der vertikal angeordneten Platte 8 mit der äußeren Fläche der Verlängerung 21 der Profilrippe 14 erfolgt.

Die gemäß der vorstehenden Erfindung vorgeschlagene Lösung, wie vorher beschrieben, eröffnet die Möglichkeit auf ein sichtbares Dichtunsprofil entlang der Stoßstelle zwischen vertikal angeordneten Wänden 8 und horizontal angeordneten Wänden 3, 4, 5 der Karosserie des Fahrzeuges zu verzichten.

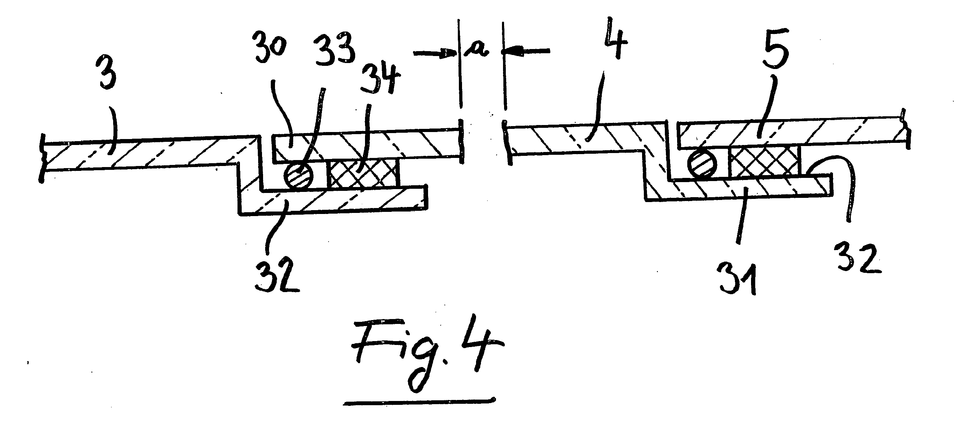

In Figur 4 sind sehr schematisch und im Längsschnitt die Platten 3, 4 und 5 zur Bildung des Fahrzeugdaches dargestellt, wobei die Platten 3 und 5 ihre ursprüngliche Längsabmessung beibehalten, hat es sich als vorteilhaft erwiesen, die mittig angeordnete Platte mit Abmessungen herzustellen, die es ermöglichen, diese Platte sowohl für ein Fahrzeug mit maximaler Länge der Karosserie als auch für ein Fahrzeug mit geringer Länge einzusetzen.

Um den Aufbau des Daches 1 an die Längen der unterschiedlichen Fahrzeuge anpassen zu können, genügt es, dass mittlere Plattenstück 4 auf Länge zu schneiden, wie dies mit (a) in Figur 4 dargestellt ist.

Die einzelnen Platten 3, 4 und 5 weisen ein flaches und geradliniges Endteil 30 auf, ferner ist ein Plattenende 31 vorgesehen, das eine Stufe bildet und eine abgesenkte Auflageebene 32 aufweist.

Um es zu ermöglichen, die Bauteile 3, 4 und 5 fest miteinander zu verbinden, ist zwischen dem Endstück 30 und dem darunterliegenden Endstück 32, das eine Auflagefläche bildet, eine Kleberschicht 33 vorgesehen. Ferner ist zwischen dem Teil 30 und 32 eine Abdichtung 34 vorgesehen, welche in vorteilhafter Weise aus hochelastischem Abdichtmaterial besteht, welches auf beiden Seiten eine Kleberschicht aufweist.

## Patentansprüche

1. Äußere Verkleidung der Karosserie für eines Wohnwagens, eines Wohnmobils oder eines ähnlichen Fahrzeuges, **dadurch gekennzeichnet, dass** die Verkleidung (2, 3, 4, 5) der oberen Karosserieplatte (10), die das Dach des Fahrzeuges bildet, in Übereinstimmung mit einer Verbindung mit einer vertikal angeordneten Platte (8) eine Verformung (12) aufweist, die eine Kammer (15) bildet, welche von einer Rippe (14) begrenzt ist, die sich in Längsrichtung des Fahrzeuges erstreckt, wobei in Übereinstimmung mit der vertikal angeordneten Verkleidungsplatte die Längsrippe 14 auf ihrer Innenseite von einer schrägen Fläche (24) begrenzt ist, die an einer schrägen Fläche der vertikal angeordneten Platte (8) anliegt und die schräge Fläche (24) der Verkleidung in einem Absatz (22) endet, der an einer Stufe (23) der vertikalen Platte (8) anliegt, die der schrägen Fläche der vertikal angeordneten Platte (8) folgt und der Absatz (22) der Verkleidung in eine Verlängerung (21) übergeht, die in eine Ausnehmung (20) eintritt, die in der vertikal angeordneten Platte (8) vorgesehen ist.

2. Äußere Verkleidung der Karosserie eines Wohnwagens, eines Wohnmobils oder eines ähnlichen Fahrzeuges, nach Patentanspruch 1, **dadurch gekennzeichnet, dass** die vertikal angeordnete Platte (8) im Inneren ein Auflager (9) aufweist, das zur Aufnahme einer Platte (10) dient, die in einer horizontalen Ebene angeordnet ist und das Dach des Fahrzeuges bildet.

3. Verkleidung, nach Patentanspruch 1, **dadurch gekennzeichnet, dass** die Längskammer (15) mit einem elastischen Kunststoffmaterial gefüllt ist, das als elastische Dauerdichtung dient.

4. Verkleidung, nach Patentanspruch 1, **dadurch gekennzeichnet, dass** die einzelnen Platten (3, 4, 5) ein flaches geradliniges Endstück (30) aufweisen, sowie ein stufenförmig ausgebildetes Endstück (31) mit einer abgesenkten Auflageebene (32).

5. Verkleidung, nach Patentanspruch 4, **dadurch gekennzeichnet, dass** zwischen jedem Endstück (30) einer Platte (3, 4, 5) und den stufenförmig ausgebildeten Endstücken (31, 32) eine hochelastische Dichtung (34) und eine Kleberschicht (33) angeordnet sind.
